Europäisches Patentamt

European Patent Office

Office européen des brevets

(19)

(11) Veröffentlichungsnummer: **0 090 199**
A2

## (12) EUROPÄISCHE PATENTANMELDUNG

(21) Anmeldenummer: 83102176.1

(22) Anmeldetag: 05.03.83

(51) Int. Cl.³: **C 09 D 3/72**, C 08 G 18/10

(30) Priorität: 31.03.82 DE 3211879

(43) Veröffentlichungstag der Anmeldung: 05.10.83
Patentblatt 83/40

(84) Benannte Vertragsstaaten: **DE FR GB IT**

(71) Anmelder: **METZELER KAUTSCHUK GMBH,
Gneisenaustrasse 15, D-8000 München 50 (DE)**

(72) Erfinder: **Blahak, Johannes, Dr., Gautinger Strasse 3,
D-8035 Gauting-Buchendorf (DE)**
Erfinder: **Ghibu,Michael, Allinger Strasse 111,
D-8039 Puchheim (DE)**
Erfinder: **Raubach, Manfred, Estinger Strasse 41,
D-8037 Olching (DE)**

(74) Vertreter: **Michelis, Theodor, Dipl.-Ing.,
Gneisenaustrasse 15, D-8000 München 50 (DE)**

(54) **Polyurethan- bzw. Polyharnstoff-Lack.**

(57) Zur Herstellung eines elastischen Lacks werden di- und/oder trifunkttionelle Polyole durch Diisocyanate mit dem Molverhältnis Polyol/Diisocyanat von $(n+1)/n$ vorverlängert; diese vorverlängerten Polyole werden im Verhältnis 1:2 mit Polyisocyanaten, zweckmäßigerweise mit einem Überschuß an Polyisocyanaten, zu Ketten mit endständigen NCO-Gruppen umgesetzt, die nach dem Aufstreichen des Lackes auf ein Untergrundmaterial unter der Einwirkung von Luftfeuchtigkeit, Elektronenstrahlen oder Diaminen ausreagieren und zu einem elastischen, sehr gut haftenden Film auf dem Untergrundmaterial führen.

ACTORUM AG

METZELER KAUTSCHUK GmbH

München, 1.3.1983
MK 411 P 82 EP

## Polyurethan- bzw. Polyharnstoff-Lack

Die Erfindung betrifft einen durch Luftfeuchtigkeit und/ oder Bestrahlung aushärtenden Polyurethan- bzw. Polyharnstoff-Lack der im Oberbegriff des Anspruchs 1 angegebenen Gattung.

Es ist bekannt, technische Großprodukte, die nicht in Brennkammern lackiert werden können, z.B. Flugzeuge, Eisenbahn-Wagen, Schiffsaufbauten usw., mit feuchtigkeitshärtenden Lacken auf der Basis von Polyisocyanat zu lackieren und damit die Oberfläche zu versiegeln. Die dabei verwendeten Lacke müssen nur auf die Oberfläche aufgesprüht werden und härten dabei unter der Einwirkung der in der Luft bzw. auf der zu lackierenden Oberfläche vorhandenen Feuchtigkeit aus.

Diese Lacke haben hervorragende Hoch- und Tieftemperatur-Qualitäten, wie es insbesondere für den Einsatz in der Luftfahrt wesentlich ist, jedoch für viele Zwecke vollständig unzureichende Bruchdehnung.

Will man also einen solchen Lack beispielsweise zur Versiegelung der Klebstoffkanten von Schlauchbooten oder allgemeiner der Klebstoffkanten von gummibeschichteten Geweben verwenden, so werden die Lacke bereits nach kurzer Zeit brüchig und rissig, so daß sie ihre Funktion, nämlich die Versiegelung der Klebstoffkante, nicht mehr erfüllen können. Unter der Einwirkung von Wasser hydrolisiert jedoch der üblicherweise für die Herstellung von Schlauchbooten verwendete Polychloropren-Kleber, so daß die Gefahr einer Lösung der Nähte besteht.

Der Erfindung liegt deshalb die Aufgabe zugrunde, einen Polyurethan- bzw. Polyharnstoff-Lack der angegebenen Gattung zu schaffen, bei dem die oben erwähnten Nachteile nicht auftreten.

Insbesondere soll ein Lack der angegebenen Gattung vorgeschlagen werden, der eine hohe Bruchdehnung hat.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß sich durch die Vorverlängerung von di- und/oder trifunktionellen Polyolen mit Diisocyanaten im angegebenen Molverhältnis eine elastifizierende Komponente ergibt, wodurch der Lack insgesamt eine extrem hohe Bruchdehnung erhält. Bringt man einen solchen Lack auf eine flexible Fläche, beispielsweise ein gummibeschichtetes Gewebe, wie es für die Herstellung von Schlauchbooten verwendet wird, auf, so kann diese Fläche starken, wiederholten Verformungen unterworfen werden, ohne daß sich Risse oder Brüche in der Lackschicht zeigen.

Als Diisocyanat werden bevorzugt modifiziertes Polyhexamethylendiisocyanat, wie es von der Bayer AG unter der Bezeichnung "Desmodur N" vertrieben wird, oder 1,1,1-Trimethylolpropan-tris-4(2-isocyanato-p-toluyl)-urethan verwendet, wie es von der Bayer AG unter der Bezeichnung "Desmodur L" vertrieben wird.

Als Polyole kommen Polyole auf der Basis von Polytetrahydrofuranpolyolen, Polycaprolaktonpolyolen, oder Polyalcylenpolycarbonatpolyolen in Frage.

Werden die vorverlängerten Polyole im stöchiometrischen Verhältnis von 1:2 mit den Polyisocyanaten umgesetzt, so kann aufgrund der vorhandenen Luftfeuchtigkeit die Vernetzung bereits während der Lagerung, also vor dem Aufstreichen des Lackes auf das Untergrundmaterial, beginnen, so daß die Lagerstabilität dieses Lackes sehr gering ist. Es hat sich nun herausgestellt, daß sich eine sehr gute Lagerstabilität erreichen läßt, wenn die Polyisocyanate im Überschuß, und zwar mit einem Überschuß von mindestens 20 %, bezogen auf das stöchiometrische Verhältnis, verwendet werden. Das Umsetzungsprodukt konnte monatelang gelagert werden, ohne daß es unter der Einwirkung von Luftfeuchtigkeit zu einer merklichen Vernetzung kam.

Die bisher beschriebenen Maßnahmen betreffen nur die hohe Bruchdehnung des Lackes, d.h., der Lack läßt sich ohne Auftreten von Rissen und Brüchen stark verformen, während seine Rückstellkraft an sich sehr gering ist. Um diese Rückstellkraft zu erhöhen, stehen zwei Verfahren zur Verfügung: Bei dem ersten Verfahren werden zusätzliche Hartsegmente durch Aminvernetzung der NCO-Gruppen eingebaut, wobei zweckmäßigerweise kurzkettige, aliphatische Diamine verwendet werden. Günstige Werte wurden erreicht, wenn 5 - 15 Mol-% der NCO-Gruppen durch Amine vernetzt wurden.

Als Alternative hierzu ist es auch möglich, 5 - 15 Mol-%, bezogen auf die NCO-Gruppen, Acrylate zuzusetzen, die bei Verwendung eines geeigneten Katalysators durch Elektronenstrahlen vernetzt werden können. Die vernetzten Endprodukte bilden ebenfalls Hartsegmente, die zu einer starken Erhöhung der Rückstellkraft führen.

Ein bevorzugtes Anwendungsgebiet dieser elastifizierten Lacke stellt die Versiegelung der Klebstoffnähte von gummibeschichteten Geweben dar; an diesen Nähten liegt das Gewebe frei, so daß Wasser eindringen und den Klebstoff angreifen kann. Durch Aufbringen dieses Lackes wird die Naht versiegelt, so daß Wasser nur noch in vernachlässigbaren Mengen über die Gummischicht selbst eindringen kann.

Solche gummibeschichteten Gewebe werden nicht nur für die Herstellung von Schlauchbooten, sondern in jüngster Zeit auch für die Herstellung von Buhnen verwendet.

Weiterhin können auch die Stoßkanten von ElastomerBahnen, wie sie beispielsweise für die Abdichtung von Dächern eingesetzt werden, durch diesen Lack versiegelt werden.

Dieser elastifizierte Lack hat nicht nur eine sehr gute Haftung auf den erwähnten Oberflächen, beispielsweise auf der Gummischicht von gummibeschichteten Geweben, sondern eine eigene Klebwirkung, so daß er auch als Flockkleber bei der Herstellung von Gummiprofilen eingesetzt werden kann.

Die Erfindung wird im folgenden anhand von Ausführungsbeispielen näher erläutert.

0090199

Beispiel 1

200 g Hexandiolpolycarbonatdiol mit einem Molekulargewicht von etwa 2000 wurde 30 min lang bei 130°C und 20 mbar entwässert; anschließend wurden 8,4 g Hexamethylendiisocyanat bei 120°C zugesetzt und bei dieser Temperatur nachgerührt, bis durch Titration kein NCO mehr festgestellt werden konnte. Das auf diese Weise vorverlängerte Diol mit einem Molekulargewicht von 4168 wurde verdünnt, so daß es ohne Probleme aufgestrichen werden konnte; zu diesem Zweck wurde das vorverlängerte Diol bei 100°C in Toluol gelöst und nachgerührt.

Bei diesem Ansatz betrug das Verhältnis Diol/Isocyanat 2:1. Als Alternative hierzu ist es auch möglich, mit einem anderen Molverhältnis zu arbeiten, beispielsweise mit dem Molverhältnis 3:2, wodurch sich vorverlängerte Diole mit einem Molekulargewicht von 6336 ergeben, mit dem Verhältnis 4:3, wodurch das Molekulargewicht 8504 wird, usw.; aus praktischen Erwägungen liegt die obere Grenze bei einem Molekulargewicht von etwa 20000.

Anschließend wurde 1 Mol des vorverlängerten, verdünnten Diols mit 2,4 Mol modifiziertem Polyhexamethylendiisocyanat, wie es von der Bayer AG unter der Bezeichnung "Desmodur N" vertrieben ist, in Lösung umgesetzt, 30 min lang bei 100°C nachgerührt und abgefüllt.

Der auf diese Weise hergestellte, elastifizierte Lack härtet unter der Einwirkung von Luftfeuchtigkeit und/oder Bestrahlung zu einer Oberflächenschicht mit hoher Bruchdehnung aus.

Als Alternative zu diesem Beispiel kann als Diisocyanat auch 1,1,1-Trimethylolpropan-tris-4(2-isocyanato-p-toluyl)- urethan verwendet werden, wie es von der Bayer AG unter der Bezeichnung "Desmodur L" vertrieben wird.

Als di- und/oder trifunktionellen Polyolen können neben dem erwähnten Hexandiolpolycarbonatdiol auch Polytetrahydrofurandiol, Polypropylenoxiddiol, Polysiloxandiol, OH-terminiertes Polybutadiendiol, Polypropylenoxidtriol, Polypropylentriester, Polysiloxantriol oder Polytetrahydrofurantriol eingesetzt werden.

Das Ausmaß der Verdünnung durch Toluol hängt von der Viskosität des vorverlängerten Polyols ab, d.h., es muß so viel Toluol zugesetzt werden, daß sich das vorverlängerte Polyol ohne Schwierigkeiten auf die zu beschichtende Fläche aufstreichen läßt.

Der Nahtbereich von zwei gummibeschichteten Geweben, die durch einen Polychloropren-Kleber miteinander verbunden worden sind, wie es bei der Herstellung von Schlauchbooten üblich ist, wurde in Wasser eingetaucht. Es ließ sich erkennen, daß eine geringe Wassermenge über die Gummischicht und eine relativ große Wassermenge über die Klebstoffkante durch das Gewebe eindrang und den Klebstoff hydrolisierte, so daß er bereits nach kurzer Zeit seine Funktion nicht mehr einwandfrei erfüllen konnte.

Zum Vergleich wurde eine entsprechende Klebstoffnaht mit einem elastifizierten Kleber nach dem oben angegebenen Beispiel versiegelt. Anschließend drang nur noch eine geringe Wassermenge über die Gummischicht ein, während das Gewebe und die Naht selbst nach außen vollständig abgedichtet waren.

Dieser Lack hatte eine extrem hohe Bruchdehnung, so daß auch bei starker Verformung und Beanspruchung der Naht keine Risse und Brüche auftraten, also die Versiegelung nicht beeinträchtigt wurde.

Um das Rückstellvermögen dieses Lackes zu verbessern, können Hartsegmente durch Aminvernetzung der NCO-Gruppen eingebaut werden. Zu diesem Zweck wurden bei einer ersten Variante 10 Mol-% 4,4-Diamino-3,3-dichlor-diphenylmethan, bezogen auf die NCO-Gruppen, eingesetzt. Dieser modifizierte Lack hatte ein hohes Rückstellvermögen, wie sich aus Versuchen an gummibeschichteten Geweben ergab.

Als Alternative hierzu ist es auch möglich, dem Lack etwa 10 Mol-% Allylsäureacrylester, bezogen auf die NCO-Gruppen, zuzusetzen; in Verbindung mit einem geeigneten Aktivator entstehen bei der Vernetzung durch Elektronenstrahlen ebenfalls Hartsegmente, die das Rückstellvermögen erhöhen.

Patentansprüche

1.  Durch Luftfeuchtigkeit und/oder Bestrahlung aushärtender Polyurethan- bzw. Polyharnstoff-Lack auf der Basis
einer Polyaddition von Polyolen und Isocyanaten zu Ketten
mit endständigen NCO-Gruppen,
d a d u r c h   g e k e n n z e i c h n e t ,  daß
a) di- und/oder trifunktionelle Polyole durch Diisocyanate mit dem Molverhältnis Polyol/Diisocyanat von (n+1)/n
   vorverlängert sind, und daß
b) die vorverlängerten Polyole im Verhältnis 1:2 mit Polyisocyanaten zu Ketten mit endständigen NCO-Gruppen umgesetzt sind.

2.  Lack nach Anspruch 1,  dadurch gekennzeichnet,  daß
die Umsetzung zwischen den vorverlängerten Polyolen und
den Polyisocyanaten mit einem Polyisocyanat-Überschuß erfolgt.

3.  Lack nach Anspruch 2,  dadurch gekennzeichnet,  daß
der Polyisocyanat-Überschuß mindestens 20 %, bezogen auf
das stöchiometrische Verhältnis, beträgt.

4.  Lack nach einem der Ansprüche 1 bis 3,  dadurch gekennzeichnet,  daß als Diisocyanat modifiziertes Polyhexamethylendiisocyanat verwendet wird.

5.  Lack nach Anspruch 1,  dadurch gekennzeichnet,  daß
als Diisocyanat  1,1,1-Trimethylolpropan-tris-4(2-iso-
cyanato-p-toluyl)-urethan verwendet wird.

6.  Lack nach einem der Ansprüche 1 bis 5, dadurch gekennzeichnet, daß Polyole auf der Basis von Polytetrahydrofuranpolyolen verwendet werden.

7.  Lack nach einem der Ansprüche 1 bis 5, dadurch gekennzeichnet, daß Polyole auf der Basis von Polycaprolactonpolyolen verwendet werden.

8.  Lack nach einem der Ansprüche 1 bis 5, dadurch gekennzeichnet, daß Polyole auf der Basis von Polyalkylenpolycarbonatpolyolen verwendet werden.

9.  Lack nach einem der Ansprüche 1 bis 8, dadurch gekennzeichnet, daß zusätzliche Hartsegmente durch Aminvernetzung der NCO-Gruppen eingebaut sind.

10. Lack nach Anspruch 9, dadurch gekennzeichnet, daß kurzkettige, aliphatische Diamine verwendet werden.

11. Lack nach einem der Ansprüche 9 oder 10, dadurch gekennzeichnet, daß 0 - 25 Mol-%, insbesondere 5 - 15 Mol-%, der NCO-Gruppen durch Amine vernetzt werden.

12. Lack nach einem der Ansprüche 1 bis 8, dadurch gekennzeichnet, daß für die Elektronenstrahlvernetzung 0 - 25 Mol-%, insbesondere 5 bis 15 Mol-%, Acrylate zugesetzt werden.